# EUROPEAN PATENT APPLICATION

(11) **EP 3 267 091 A1**
(43) Date of publication of application: **10.01.2018**
(21) Application number: 16305839.9
(22) Date of filing: 04.07.2016
(51) Int. Cl.: F17C 1/06

(54) **PRESSURE VESSEL WITH A TAPE-BASED REINFORCEMENT STRUCTURE**

(71) Applicant: Plastic Omnium Advanced Innovation and Research, 1120 Bruxelles (BE)
(72) Inventor: CRIEL, Bjorn, 1750 SINT-MARTENS-LENNIK (BE); POISSON, Marc, 1000 Bruxelles (BE)
(74) Representative: Potdevin, Emmanuel Eric

(57) **Abstract**

It is proposed a pressure vessel comprising a body and a tape-based reinforcement structure arranged onto the body, the tape-based reinforcement structure comprising:
- a primary tape arranged in a circumferential manner onto the body;
- a secondary tape arranged in a non-circumferential manner onto the body, at least one portion of the secondary tape being attached to the primary tape.

## Description

### Field of the invention

The field of the invention relates to pressure vessels. In particular, the invention relates to a pressure vessel equipped with an outer reinforcement structure. The invention also concerns the process for manufacturing such pressure vessel.

### Background

Generally, existing pressure vessels, such as CNG (Compressed Natural Gas) tanks, CHG (Compressed Hydrogen Gas) tanks, LPG (Liquefied Petroleum Gas) tanks, LNG (Liquefied Natural Gas) or the like, comprises a body and a reinforcement structure on the periphery of the body.

It is known to obtain a reinforcement structure by using circumferential filament winding. The filament winding method is a method in which reinforcement fibre bundles (yarns) are impregnated with resin beforehand to prepare a tow shaped prepreg and a reinforcement structure is formed by winding the tow shaped prepreg on the body, or a method in which fibre bundles which are fed in a predetermined direction are impregnated with resin to be wound onto a body.

In vessels equipped with a reinforcement structure produced by filament winding technology, an important amount of reinforcement fibres is used. This is due to the fact that continuous fibres are wound on the vessel, increases the weight, production time and the cost of the vessel. Therefore it is desirably to propose a pressure vessel with a reinforcement structure which is lighter, cost effective and simpler to manufacture.

### Summary

An object of the present invention is to solve the above-mentioned problem by proposing a pressure vessel comprising a body and a tape-based reinforcement structure arranged onto the body, the tape-based reinforcement structure comprising:
- a primary tape arranged in a circumferential manner onto the body;
- a secondary tape arranged in a non-circumferential manner onto the body, at least one portion of the secondary tape being attached to the primary tape.

In other words, the pressure vessel of the invention comprises a body and a tape-based reinforcement structure.

The body of the present document has to be considered in different ways according to the type of the pressure vessel, such as pressure vessel of type IV and pressure vessel of type V.

In a particular embodiment, the body is a liner or a liner on which a tape is or tapes are arranged onto.

By liner, it has to be understood a hollow body allowing to store the gas in a leak tight manner and support to the tape arrangement (i.e. the tape-based reinforcement structure).

By definition, pressure vessel of type IV is a construction featuring a liner on which a carbon fiber or hybrid carbon/glass fiber composite is arranged. The liner remains a part of the vessel after manufacturing.

By definition, pressure vessel of type V is a linerless construction that features a carbon fiber or hybrid carbon/glass fiber composite arranged onto a collapsible or dissolvable support.

Preferably, the pressure vessel body is type IV. The liner is made of the following materials: polyamide, high-density polyethylene, a thermoplastic coextruded structure. The liner can also comprise fibre elements such as carbon fibre or hybrid carbon/glass fibre composite, aramid fibres or glass fibres inside the thermoplastic matrix.

In a particular embodiment, the liner is made out of a material which can be welded to the tape; for instance the liner and the tape are made out of the same material.

The term "thermoplastic" denotes any thermoplastic polymer including thermoplastic elastomers, as well as blends thereof. The term "polymer" denotes both homopolymers and copolymers (especially binary or ternary copolymers). Examples of such copolymers are, but not limited to, random copolymers, linear block copolymers, other block copolymers and graft copolymers. One polymer which is often used is polyethylene. Excellent results have been obtained with high density polyethylene (HDPE) and fibre reinforced polymer.

On the other hand, the pressure vessel body is type V.

The body can also comprise fibre elements such that carbon fibre or hybrid carbon/glass fibre composite, aramid fibres or glass fibres and thermoplastic materials.

The advantage of having a pressure vessel of type V is to reduce weight and outer construction's volume.

The tape-based reinforcement structure of the invention comprises two main kinds of tape.

The first kind of tape is a primary tape which is arranged in a circumferential manner. It is a reinforcement tape arranged continuously and circumferentially onto the body so as to increase the mechanical resistance of the whole body.

By "mechanical resistance", it has to be understood high pressure resistance, impact/burst resistance, fire resistance and cycling resistance.

By "arranged in a circumferential manner onto the body", it is understood that the primary tape is arranged onto the circumference of the body in a plane with an angle between 10 and 170 degrees with respect to the axial direction of the body.

In a particular embodiment, the primary tape is arranged directly onto the body.

One can identify two types of primary tapes: one arranged in a hoop manner and one arranged in a helical manner.

A primary tape arranged in a hoop manner is formed by arranging the tape with an angle between 80 and 100 degrees with respect to the axial direction of the body, more preferably between 85 and 95 degrees. Such angles will allow a good absorption of the radial forces.

A primary tape arranged in a helical manner is formed by angle between 10 and 60 degrees. A primary tape arranged in a helical manner is typically used to reinforce the end section of the body.

The second kind of tape is a secondary tape which is arranged in a non-circumferential manner onto the body.

By "arranged in a non-circumferential manner onto the body", it is understood that the secondary tape is an interrupted tape which is defined as a portion of tape arranged onto the body.

By this, predetermined portions on the body can be reinforced. By the term "predetermined portions", it is understood portions of the body which are subjected to higher mechanical stress compared to others portions of the body.

In a particular embodiment, the secondary tape is a cut tape laid along a helical angle and arranged in an optimized location in terms of mechanical resistances by welding. That is to say that the secondary tape is placed to locally reinforce mechanically predetermined portions of the body. The secondary tape according to the invention comprises at least one portion which is attached to the primary tape.

In other words, the secondary tape of the invention is attached in a manner such that it is attached at least partially to the primary tape.

In a particular embodiment, the secondary tape is attached in a manner such that it lays onto the primary tape and also onto the body itself.

In another particular embodiment, the secondary tape is attached in a manner such that it is attached to the primary tape. This particular embodiment is easier to implement than the preceding one.

The attachment of the secondary tape to the primary tape can be of four kinds.

The secondary tape can be attached in a manner such that it lays at least partially over the primary tape previously arranged onto the body.

The secondary tape can also be attached in a manner such that the primary tape lays at least partially over the secondary tape previously arranged onto the body.

The secondary tape can also be attached in a manner such that it lays between two primary tapes. This particular embodiment of attachment is particularly reliable.

The primary tape can also be attached in a manner such that it lays between two secondary tapes.

Thus, thanks to the invention, the number of tapes arranged in a circumferential and a helical manner is limited allowing reducing the weight of the pressure vessel. The tape-based reinforcement structure proposed by the invention is therefore beneficial in terms of tape consumption and consequently in terms of weight, cost and manufacturing time saving.

By "tapes", it has to be understood all kinds of reinforcing fibres in a polymer resin.

The reinforcing fibres can be made from for example, carbon, glass, basalt, aramid, polyethylene, or any other reinforcement. The reinforcing fibres add strength and stiffness to a part along the direction of the fibre length. The fibres are preferably continuous or near continuous in length and aligned parallel with the tape length (or longitudinal axis of the tape); but no specific reinforcement format within the tape is required for the invention to be practiced.

The polymer resin can be thermoplastic such as a polyamide or polyphenylene sulfide, or thermosetting such as an epoxy or unsaturated polyester.

As with most polymer composite applications, the specific resin and fibres used and their proportion and format within the composite are determined by the specific requirements of the part to be manufactured.

The thermoplastic tapes are arranged onto the body by laser, hot gas, IR, ultrasound, electronic projection or any others methods known by the person skilled in the art.

The thermoplastic material is bonded *in situ* as it is arranged on the body by the application of heat and pressure.

The tape can be almost any shape, for example band shape, wave shape. Preferably, the tape is a band shape.

The primary tape and the secondary tape of the invention are intermingled and form an area comprising intermingled tapes. That is to say that the primary tape and the secondary tape are mixed one onto another.

All combinations of interminglement between the primary tape and the secondary tape can be envisaged provided that the secondary tape is attached to one primary tape. The secondary tape intermingled with a primary tape has the advantage to highly reinforce mechanically the whole tape-based reinforcement structure.

One example of interminglement can be the following one: one primary tape / one secondary tape / one primary tape. This particular configuration allows to reduce the stresses at the edge of the secondary tape and by this to reduce further the quantity of carbon fiber needed to resist to the pressure. By the edge is understood the end sections of the tapes that are cut during the placement operation.

Another example of interminglement can be the following one: one primary tape / one secondary tape.

Another example of interminglement can be the following one: one secondary tape / one primary tape.

The pressure vessel body of the invention is an elongated hollow body.

The elongated hollow body can theoretically be almost any shape, but shapes made of sections of cylinders are preferably employed. The cross section of the hollow body can also be toroidal, oval, oblong, etc.

In a particular embodiment, the body of the pressure vessel comprises a cylindrical center section and two body end sections.

The two body end sections can theoretically be almost any shape, but shapes of dome are preferably employed. The contour of the dome is typically geodesic but any other contour can be applied within the invention.

In a particular embodiment, said two body end sections are symmetric.

In a preferred embodiment, the two end sections are domes.

In another particular embodiment, said two body end sections are asymmetric.

The elongated hollow body comprises a first zone Z1 extending in the longitudinal direction of the body from at least 10% of the diameter of the cylindrical center section of the body starting at the base of the cylindrical center section of the body extending at the most to the half of the length of the cylindrical center section of the body.

The base of the cylindrical center section is one of the two extremities of the cylindrical center section of the body. The elongated hollow body comprises a second zone Z2 extending in the longitudinal direction of the body from the furthest point of one end section starting at the base of the cylindrical center section of the body extending at the most to the half of the length of the cylindrical center section of the body.

As it is previously defined, the predetermined portion is an area of the elongated hollow body that requires to be reinforced. The predetermined portion is the surface of the elongated hollow body comprising the zone Z2 and excluding the zone Z1.

The tape-based reinforcement structure of the invention allows to the other portions of the body than the predetermined portions (Z2-Z1) to reduce the carbon fibre on these portions. The tape-based reinforcement structure is such that the secondary tape is attached to the body from at least one point of the zone Z1 to at least one point of the zone Z2 arranged over one end section and/or inversely.

If the first zone Z1 extends in the longitudinal direction of the body from less than 10% of the diameter of the cylindrical center section of the elongated hollow body starting at the base of the cylindrical center section of the elongated hollow body, the pressure vessel does not present good results in terms of strength.

If the first zone Z1 extends in the longitudinal direction of the body more than the half of the length of the cylindrical center section of the body and/or if the second zone Z2 extends in the longitudinal direction of the body more than the half of the length of the cylindrical center section of the body, the pressure vessel does not present good results in terms of weight and cost savings.

Thus such tape-based reinforcement structure presents the advantage to have a light pressure vessel with high mechanical resistances.

In a preferred embodiment, the surface comprising intermingled tapes extends to a length superior or equal to 10% of the diameter of the body in the longitudinal direction of the body. Below this value, the interminglement does not present sufficient mechanical strength.

The body may be made in one-piece by blow-molding or rotational molding, or the body may be made in two-pieces by rotational molding or injection-molding and welded together after the molding.

The pressure vessel of the invention is used for the storage of Compressed Natural Gas, Compressed Hydrogen Gas, Liquefied Petroleum Gas or Liquefied Natural Gas.

According to a second aspect of the invention there is provided a method for manufacturing the pressure vessel of the invention.

The method comprises the following steps:
- Loading one or multiple tapes on a tape placement machine and load a liner into the machine.
- Place a primary tape in a circumferential manner onto the liner by using a heating means combined with a pressure application means; hereby the interface between the tape and the liner is heated up to at least the melt temperature of the materials. The molten surfaces are then pressed together at a defined pressure.

- Cut the primary tape by a cutting means and finish the pressure application up to the end of the cut primary tape.
- Place the secondary tape in a non-circumferential manner on the body which is at this stage comprising the liner combined with the primary tape in a circumferential manner. As described in the invention this secondary tape can be extended over the cylindrical center section or can be limited to the end sections.
- Cut the secondary tape by a cutting means and finish the pressure application up to the end of the cut secondary tape.
- The placement of a secondary tape can then be repeated until the necessary surface is covered on the body.
- The placement and cutting of the primary tape and the secondary tape can be repeated up to a configuration where the reinforcement structure is strong enough to resist to the requested burst pressure.

A person skilled in the field can understand that the above described sequence can also start with one tape or multiple tapes placed in a non-circumferential manner followed by one tape or multiple tapes placed in a circumferential manner.

The heating means can be performed by a laser source, a hot gas, an IR radiation, an ultrasound source, electronic projection or any other heat source known by the person skilled in the art.

The pressure application can be performed by a consolidation roller or any other means allowing pushing the tape onto the body.

Tapes being made of thermoplastic can be bonded *in situ* while they are being arranged onto the body by the application of heat and pressure. This *in situ* consolidation allows a stable and fast manufacturing of the pressure vessel.

The cutting step is performed by cutting means such as cutter blade or by increasing significantly the heating of the tape. For example in case of a laser heating means the laser power is significantly increased.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 illustrates schematically a pressure vessel prior tape arrangement.
Figure 2A illustrates schematically a pressure vessel according to a first embodiment of the invention.
Figure 2B illustrates schematically the pressure vessel of the figure 2A being rotated by 180 degrees.
Figure 3A illustrates schematically a pressure vessel according to a second embodiment of the invention.
Figure 3B illustrates schematically the pressure vessel of the figure 3A being rotated by 180 degrees.
Figure 4A illustrates schematically a pressure vessel according to a third embodiment of the invention.
Figure 4B illustrates schematically the pressure vessel of the figure 4A being rotated by 180 degrees.
Figure 5A illustrates schematically a pressure vessel according to a fourth embodiment of the invention.
Figure 5B illustrates schematically the pressure vessel of the figure 5A being rotated by 180 degrees.
Figure 6A illustrates schematically a pressure vessel according to a fifth embodiment of the invention.
Figure 6B illustrates schematically the pressure vessel of the figure 6A being rotated by 180 degrees.
Figure 7 illustrates schematically an interminglement of one primary tape and one secondary tape.

Throughout the figures, like reference numerals have been used to designate like features.

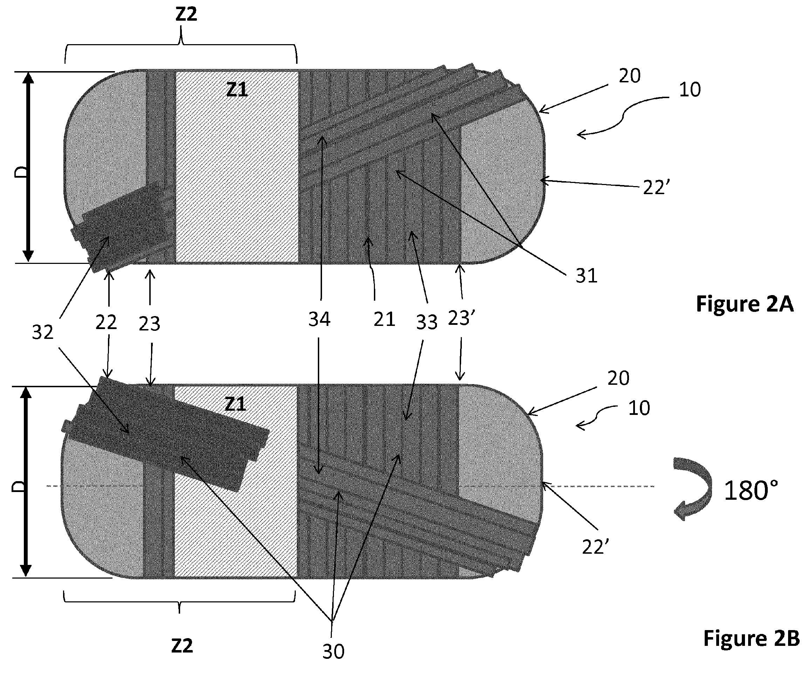

All the figures 2-6 have been described in a limited scope such that the upper tape is not represented to highlight the positioning of the secondary tape.

Indeed, all combinations of interminglement can be envisaged between the primary tape and the secondary tape, provided that the secondary tape is attached to one primary tape.

### Description of embodiments

Figures 2A-6A and figures 2B-6B illustrates schematically a pressure vessel in a particular embodiment of the invention. Figures 2B-6B is the corresponding representation of the pressure vessel of Figures 2A-6A rotated by 180 degrees.

Figures 2-6 illustrate schematically a pressure vessel 10 comprises a body 20 and a tape-based reinforcement structure 30 arranged onto the body 20.

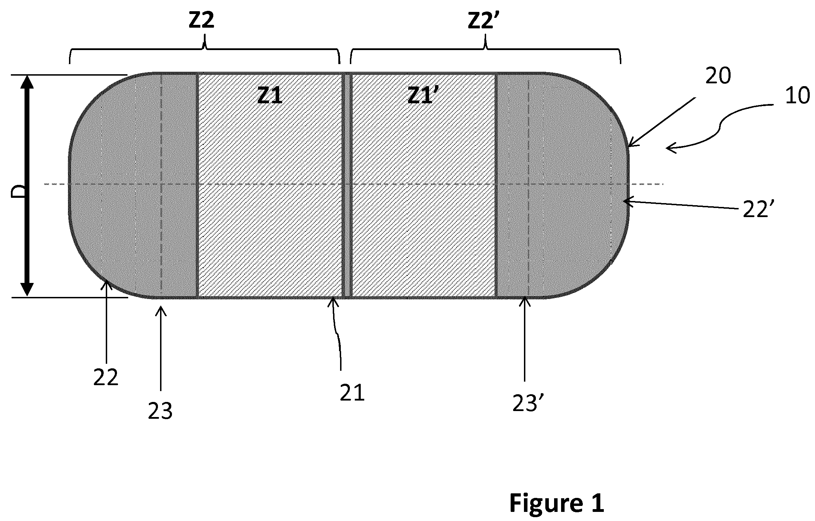

Figure 1 illustrates a pressure vessel prior to tape arrangement. The pressure vessel comprises a body 20 and no tape-based reinforcement structure arranged onto the body 20. The body 20 is a liner made of thermoplastic material having high-pressure gas barrier properties, such as polyamide. It can also comprises fibre elements such that carbon fibre or hybrid carbon/glass fibre composite.

The body 20 is an elongated hollow body comprising a cylindrical center section 21 and two symmetric body end sections 22, 22' forming domes.

The body 20 comprises a first zone Z1 extending in the longitudinal direction of the body from at least 10% of the diameter of the cylindrical center section of the body starting at the base 23 of the cylindrical center section of the body extending at the most to the half of the length of the cylindrical center section of the body and a second zone Z1' extending in the longitudinal direction of the body from at least 10% of the diameter of the cylindrical center section of the body starting at the base 23' of the cylindrical center section of the body extending at the most to the half of the length of the of cylindrical center section of the body.

The body also comprises two second zone Z2, Z2' extending in the longitudinal direction of the body from the furthest point of one end section 22, 22' starting at the base 23, 23' extending at the most to the half of the length of the cylindrical center section of the body.

The body 20 comprises predetermined portions subjected to higher mechanical stress compared to others portions of the body. These predetermined portions correspond to the surface of the body 20 comprising the zone Z2 and excluding the zone Z1 and/or comprising the zone Z2' and excluding the zone Z1'. They require predetermined reinforcement.

Figures 2-6 illustrate schematically the pressure vessel 10 comprises a body 20 of the figure 1 and a tape-based reinforcement structure 30 arranged onto the body 20.

The tape-based reinforcement structure 30 of the invention comprises at least one primary tape 31 arranged in a circumferential manner onto the body 20 and at least one secondary tape 32 arranged in a non-circumferential manner onto the body 20. The secondary tape 32 comprises at least one portion attached to the at least one primary tape 31.

By "tapes", it has to be understood all kinds of reinforcing fibres in a thermoplastic resin. In all these embodiments, the tapes are in band shape.

The primary tape 31 comprises at least one tape 33 arranged in a hoop manner and at least one tape 34 arranged in a helical manner.

The tape 33 is formed by arranging a tape in a hoop manner with a placement angle of 90 degrees with respect to the longitudinal direction of the body. Other placement angles may be used, provided that the placement angles are comprised between 80 and 100 degrees with respect to the longitudinal direction of the body. Such placement angles allow a good absorption of the radial forces.

For a tape placed helically 34 the placement angle is between 10 and 60 degrees, placed over one body end section.

The secondary tape 32 is a portion of tape arranged in a helical manner on a predetermined portion on the body 20. In other words, the secondary tape 32 is a cut tape laid along a helical angle. The secondary tape 32 is attached to the primary tape 31 previously arranged onto the body in a manner such that it lays at least partially over the primary tape.

The secondary tape 32 is used to locally reinforce mechanically predetermined portions of the body.

Thus, thanks to the invention, the number of primary tape arranged in a helical and in a circumferential manner is limited to the benefit of the weight of the pressure vessel. In other words, the secondary tape arranged in a predetermined way on the body is enough to improve the mechanical resistance without making heavier the pressure vessel.

The secondary tape 32 is bonded *in situ* onto the body by the application of heat and pressure.

The tape-based reinforcement structure is such that the secondary tape is attached to the body from the zone Z1 or Z1' to the zone Z2 or Z2' arranged over the corresponding dome 22 or 22'.

The primary tape and the secondary tape are intermingled.

The pressure vessel of figure 2 comprises a tape-based reinforcement structure comprising a tape 33 arranged in a hoop manner, a tape 34 arranged in a helical manner and a secondary tape 32. The tape 33 is arranged in a hoop and a circumferential manner directly on the body 20. The tape 34 is arranged helically and circumferentially on the body and on the tape 33 previously arranged in a hoop manner. The secondary tape 32 is a cut tape arranged in a helical and a non-circumferential manner onto a predetermined portion of the body 20, the arrangement starting onto the primary tape arrangements from the zone Z2 in figure 2A and extending in the longitudinal direction of the body to the zone Z1 in figure 2B, arranged over the dome 22. More precisely, the arrangement of the secondary tape 32 starts from the base 23 of the cylindrical center section 21 and extends in the longitudinal direction of the body to the zone Z1 in figure 2B, arranged over the dome 22. The secondary tape is intermingled with the primary tape, previously arranged onto the body, and forms a surface of interminglement extending to a length of 40% of the diameter of the cylindrical center section of the body in the longitudinal direction of the body.

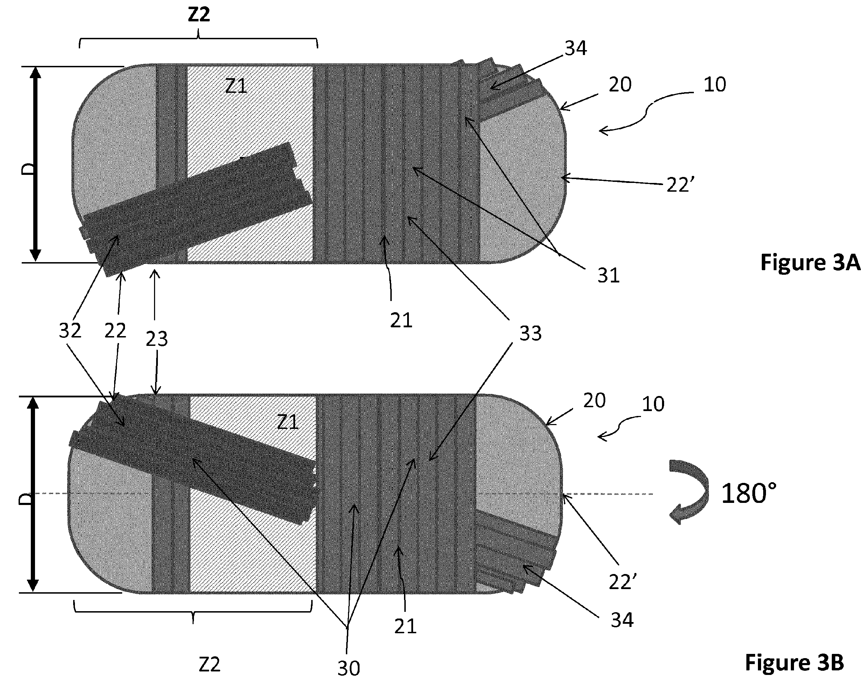

The pressure vessel of figure 3 comprises a tape-based reinforcement structure comprising a tape 33 arranged in a hoop manner, a tape 34 arranged in a helical manner and a secondary tape 32. The tape 34 is arranged helically and circumferentially directly on the body 20. The tape 33 is arranged in a hoop way on the tape 34 previously arranged on the body. The secondary tape 32 is a cut tape arranged in a non-circumferential and a helical manner onto a predetermined portion of the body 20, the arrangement starting onto the primary tapes previously arranged from the zone Z1 in figure 3A and extending in the longitudinal direction of the body to the zone Z1 in figure 3B, arranged over the dome 22. More precisely, the arrangement of the secondary tape 32 starts from about 48% of the diameter of the cylindrical center section of the body starting at the base 23 of the body and extends in the longitudinal direction of the body to about 48% of the diameter of the cylindrical center section of the body starting at the base 23 of the body. The secondary tape is intermingled with the primary tape, previously arranged onto the body, and thus, forms two surfaces of interminglement both extending to a length of about 48% of the diameter of the cylindrical center section of the body in the longitudinal direction of the body.

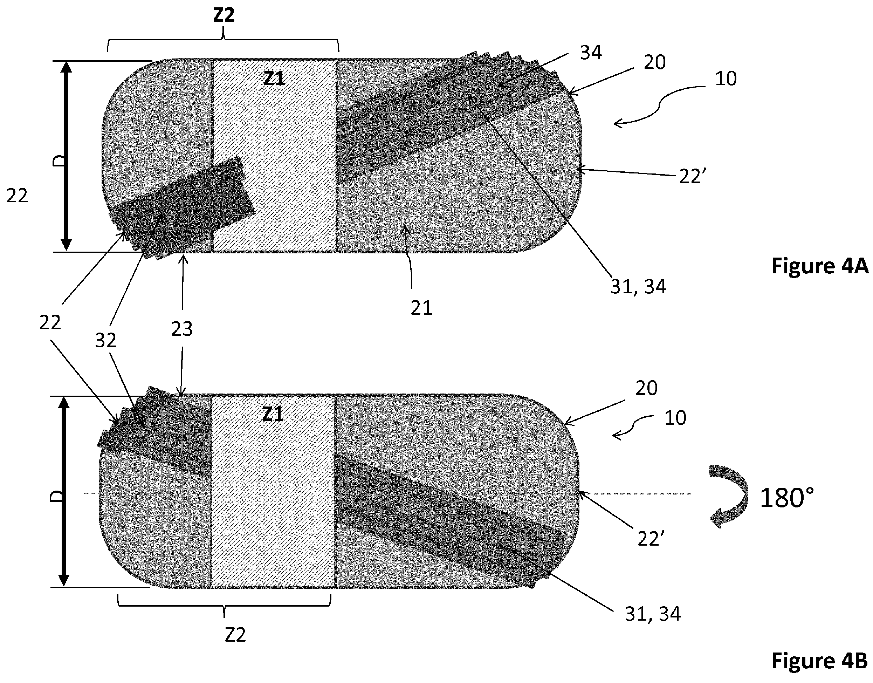

The pressure vessel of figure 4 comprises a tape-based reinforcement structure comprising one tape 34 arranged helically onto the body and a secondary tape 32. The secondary tape 32 is a cut tape arranged in a helical and a non-circumferential manner onto a predetermined portion of the body 20, the arrangement starting onto the tape 34 from the zone Z1 in figure 4A and extending in the longitudinal direction of the body to the dome 22 in figure 4B, arranged over it. More precisely, the arrangement of the secondary tape 32 starts from about 20% of the diameter of the cylindrical center section of the body starting at the base 23 of the body and extends in the longitudinal direction of the body to the dome 22 after being arranged over it. The secondary tape 32is intermingled with the tape 34 and thus, forms one surface of interminglement extending to a length of about 20% of the diameter of the cylindrical center of the body in the longitudinal direction of the body.

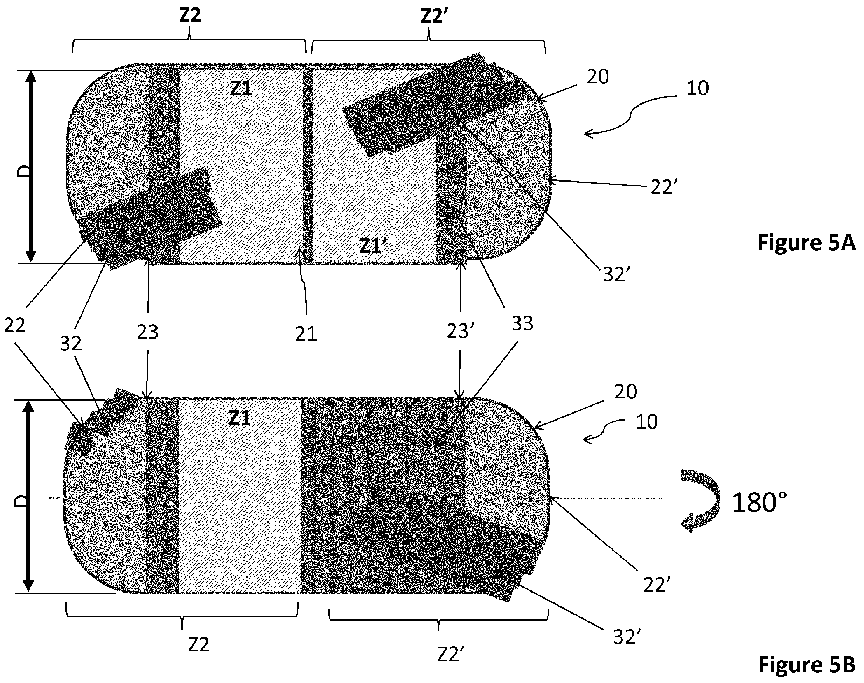

The pressure vessel of figure 5 comprises a tape-based reinforcement structure comprising one tape 33 arranged in a hoop and in a circumferential manner and two secondary tapes 32, 32'. The two secondary tapes 32, 32' are respectively a cut tape arranged helically onto a predetermined portion of the body 20.

The arrangement of the first secondary tape 32 starts on the previously tape 33 arranged in a hoop way from the zone Z1 in figure 5A and extends in the longitudinal direction of the body to the dome 22 in figure 5B, after being arranged over it. More precisely, the arrangement of the first secondary tape 32 starts from about 20% of the diameter of the cylindrical center section of the body starting at the base 23 of the body and extends in the longitudinal direction of the body to the dome 22.

The first secondary tape 32 is intermingled with the primary tape 33 previously arranged in a hoop manner and thus, forms one surface of interminglement extending to a length of about 20% of the diameter of the cylindrical center section of the body in the longitudinal direction of the body.

The arrangement of the second secondary tape 32' starts on the previously arranged primary tape 33 from the zone Z1' in figure 5A and extends in the longitudinal direction of the body to the zones Z1' and Z2', arranged over the dome 22' in figure 5B. More precisely, the arrangement of the second secondary tape 32' starts from about 48% of the diameter of the cylindrical center section of the body starting at the base 23' of the body and extends in the longitudinal direction of the body to about 48% of the diameter of the cylindrical center section of the body starting at the base 23' of the body. The secondary tape is intermingled with the primary tape previously arranged and thus, forms two surfaces of interminglement both extending to a length of about 48% of the diameter of the cylindrical center section of the body in the longitudinal direction of the body.

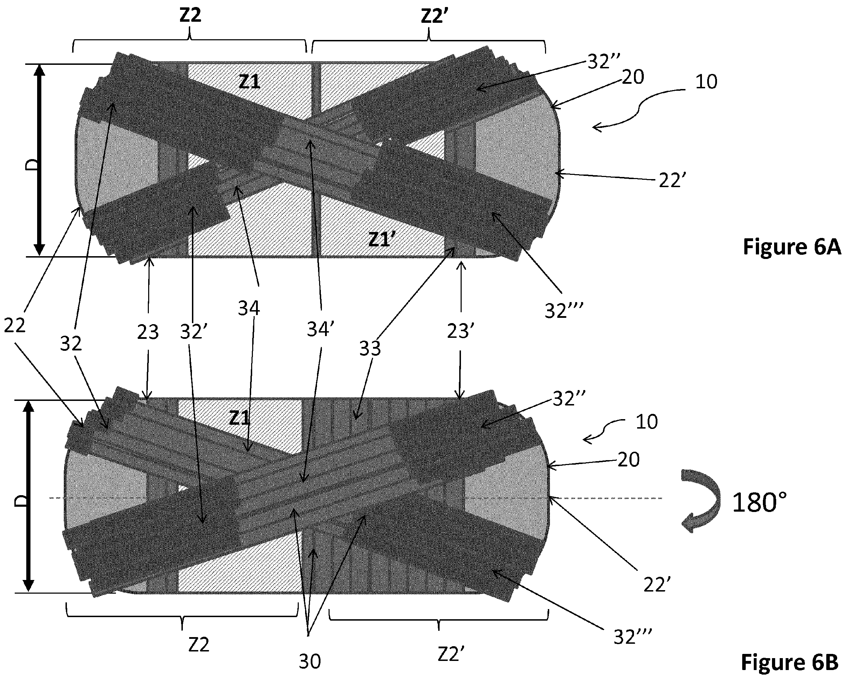

The pressure vessel of figure 6 comprises a tape-based reinforcement structure comprising a tape 33 arranged in a hoop manner, two tapes 34, 34' arranged helically and four secondary tapes 32, 32', 32", 32"'. The tape 33 is arranged directly on the body 20 in a circumferential manner. The two tapes 34, 34' are arranged in a circumferential and in a helical manner on the body and on the tape 33 previously arranged onto. The four secondary tapes 32, 32', 32", 32''' are respectively a tape arranged helically onto the previously arranged tapes and specifically onto a predetermined portion of the body 20.

The arrangement of the first secondary tape 32 starts onto the primary tapes 33, 34, 34' from the zone Z1 in figure 6A and extends in the longitudinal direction of the body to the dome 22 in figure 6B, after being arranged over it. More precisely, the arrangement of the first secondary tape 32 starts from about 35% of the diameter of the cylindrical center section of the body starting at the base 23 of the body and extends in the longitudinal direction of the cylindrical center section of the body to the dome 22.

The first secondary tape 32 is intermingled with the primary tapes 33, 34, 34' and thus, forms one surface of interminglement extending to a length of about 35% of the diameter of the cylindrical center section of the body in the longitudinal direction of the body.

The arrangement of the second secondary tape 32' starts onto the tapes 33, 34, 34' previously arranged from the zone Z1 in figure 6A and extends in the longitudinal direction of the body 20 to the zones Z1 and Z2 in figure 6B, arranged over the dome 22. More precisely, the arrangement of the secondary tape 32' starts from about 20% of the diameter of the cylindrical center section of the body starting at the base 23 of the body and extends in the longitudinal direction of the cylindrical center section of the body to about 30% of the diameter of the cylindrical center section of the body starting at the base 23 of the body. The secondary tape is intermingled with the tape arranged previously helically and thus, forms two surfaces of interminglement both extending respectively to a length of about 20% and 30% of the diameter of the cylindrical center section of the body in the longitudinal direction of the body.

The arrangement of the third secondary tape 32" starts onto the primary tapes 33, 34, 34' previously arranged 33, 34, 34' from the zone Z1' in figure 6A and extends in the longitudinal direction of the body to the zones Z1' and Z2' in figure 6B, arranged over the dome 22'. More precisely, the arrangement of the secondary tape 32" starts from about 35% of the diameter of the cylindrical center section of the body starting at the base 23' of the body and extends in the longitudinal direction of the body to about 15% of the diameter of the cylindrical center section of the body starting at the base 23' of the body. The secondary tape 32" is intermingled with the tape previously helically arranged and thus, forms two surfaces of interminglement both extending respectively to a length of about 35% and 15% of the diameter of cylindrical center section of the body in the longitudinal direction of the body.

The arrangement of the fourth secondary tape 32''' starts onto the previously arranged primary tapes 33, 34, 34' from the zone Z1' in figure 6A and extends in the longitudinal direction of the body to the zones Z1' and Z2' in figure 6B, arranged over the dome 22'. More precisely, the arrangement of the secondary tape 32'" starts from about 35% starting at the base 23' of the body and extends in the longitudinal direction of the body to about 35% of the diameter of the cylindrical center section of the body starting at the base 23' of the body. The secondary tape is intermingled with the tape helically arranged and thus, forms two surfaces of interminglement both extending to a length of about 35% of the diameter of the cylindrical center section of the body in the longitudinal direction of the body.

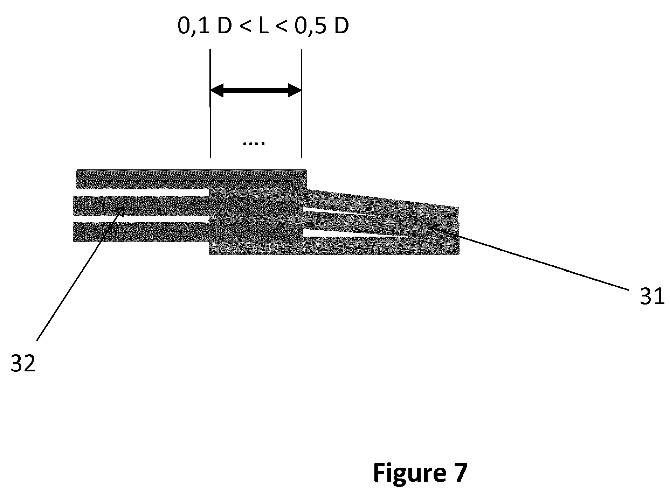

Figure 7 is a zoomed view of an interminglement between a secondary tape and a primary tape.

Onto the body of a pressure vessel of the invention, the secondary tape is intermingled with a primary tape and forms a surface of interminglement extending to a length strictly superior to 10% and strictly inferior to 50% of the diameter of the cylindrical center section of the body in the longitudinal direction of the body. This particular interminglement surface allows a good attachment of the secondary tape onto the primary tape. Thus, the secondary tape can act its role of reinforcement element by distributing in a uniform way the mechanical constraints. Such interminglement presents the advantage to obtain light pressure vessel and presenting high mechanical resistances.

The skilled person will appreciate that other variants of the present invention may be within the scope of the attached claims.

## Claims

1. Pressure vessel comprising a body and a tape-based reinforcement structure arranged onto the body, the tape-based reinforcement structure comprising:
- a primary tape arranged in a circumferential manner onto the body;
- a secondary tape arranged in a non-circumferential manner onto the body, at least one portion of the secondary tape being attached to the primary tape.

2. Pressure vessel according to claim 1, wherein said at least one portion of the secondary tape is attached in a manner such that it is attached to the primary tape.

3. Pressure vessel according to claim 1, wherein the body is an elongated hollow body and wherein the body comprises a cylindrical center section and two body end sections.

4. Pressure vessel according to claim 3, wherein the body comprises a first zone Z1 extending in the longitudinal direction of the body from at least 10% of the diameter of the cylindrical center section of the body starting at the base of the cylindrical center section of the body extending at the most to the half of the length of the body.

5. Pressure vessel according to claims 3 and 4, wherein the body comprises a second zone Z2 extending in the longitudinal direction of the body from the furthest point of one end section starting at the base of the cylindrical center section of the body extending at the most to the half of the length of the body.

6. Pressure vessel according to any one of the preceding claims, wherein the secondary tape is attached to the body from at least one point of the zone Z1 to at least one point of Z2 arranged over one end section.

7. Pressure vessel according to any one of the preceding claims, wherein the primary tape and the secondary tape are intermingled and forms a surface comprising intermingled tapes.

8. Pressure vessel according to claim 7, wherein the surface comprising intermingled tapes extends to a length superior or equal to 10% of the diameter of the cylindrical center section of the body in the longitudinal direction of the body.

9. Pressure vessel according to any one of the preceding claims, wherein the primary tape and the secondary tape are made of reinforcing fibres and a polymer resin.

10. Pressure vessel according to claim 9, wherein the reinforcing fibres can be made from carbon, glass, basalt, aramid, polyethylene, or any other reinforcement.

11. Pressure vessel according to any one of the preceding claims, wherein the primary tape and the secondary tape are arranged onto the body by laser, hot gas, IR, ultrasound, electronic projection or any others methods known by the person skilled in the art.

12. Pressure vessel according to any one of the preceding claims 3-6, wherein the end body sections are symmetric.

13. Pressure vessel according to the preceding claim 12, wherein the end body sections are domes.

14. Pressure vessel according to any one of the preceding claims, wherein it is used for the storage of Compressed Natural Gas, Compressed Hydrogen Gas, Liquefied Petroleum Gas or Liquefied Natural Gas.
